Europäisches Patentamt

(19) European Patent Office

Office européen des brevets

(11) Numéro de publication : **0 031 744**
**B1**

(12) **FASCICULE DE BREVET EUROPÉEN**

(45) Date de publication du fascicule du brevet :
04.07.84

(21) Numéro de dépôt : **80401758.0**

(22) Date de dépôt : **09.12.80**

(51) Int. Cl.³ : **G 01 P  5/18**, G 01 F  1/00

(54) Dispositif et procédé pour la détermination de caractéristiques d'écoulement d'un fluide.

(30) Priorité : **28.12.79 FR 7931910**

(43) Date de publication de la demande :
**08.07.81 Bulletin 81/27**

(45) Mention de la délivrance du brevet :
**04.07.84 Bulletin 84/27**

(84) Etats contractants désignés :
**DE FR GB IT NL**

(56) Documents cités :
**FR-A- 1 417 169**
**FR-A- 2 013 001**
**FR-A- 2 090 379**
**FR-A- 2 161 834**
**FR-A- 2 373 833**

(73) Titulaire : **SOCIETE DE PROSPECTION ELECTRIQUE**
**SCHLUMBERGER**
**42, rue Saint-Dominique**
**F-75340 Paris Cedex 07 (FR)**
**FR IT**
**Schlumberger Limited**
**277 Park Avenue**
**New York, N.Y. 10017 (US)**
**DE GB NL**

(72) Inventeur : **Hulin, Jean-Pierre**
**10 bis, avenue de la Trémouille**
**F-94100 Saint-Maur (FR)**

(74) Mandataire : **Hagel, Francis et al**
**Service Brevets ETUDES ET PRODUCTIONS**
**SCHLUMBERGER B.P. 202**
**F-92142 Clamart Cedex (FR)**

Jouve, 18, rue St-Denis, 75001 Paris, France

## Description

La présente invention concerne un dispositif et le procédé correspondant pour la détermination de la vitesse d'écoulement d'un fluide, notamment d'un fluide polyphasique, dans une conduite sensiblement verticale, utilisant deux capteurs sensibles à la même grandeur physique et espacés dans la direction de l'écoulement, et des moyens de calcul pour déterminer la vitesse d'écoulement par corrélation des deux signaux produits par les capteurs.

Le brevet français n° 2.161.834 décrit un dispositif de ce type, conçu pour la détermination de la vitesse d'écoulement de domaines formés par une phase contenue dans un fluide polyphasique et pour la détermination de la composition du fluide polyphasique, dans lequel chaque capteur comprend deux sondes à film chaud insérées dans deux branches d'un pont de Wheatstone.

L'une des deux sondes de chaque capteur est disposée au cœur de l'écoulement de façon à subir l'influence de tous les phénomènes locaux liés à celui-ci, tandis que l'autre sonde est soustraite à cette influence et sert de référence de température moyenne.

La distance entre celles des sondes des deux capteurs qui sont disposées dans la zone centrale de l'écoulement étant connue, la vitesse d'écoulement des domaines est le rapport de cette distance connue au décalage temporel entre les parties homologues des signaux des deux capteurs, obtenu par corrélation.

Ce dispositif connu présente plusieurs inconvénients parmi lesquels on peut notamment citer une assez grande fragilité des sondes, l'impossibilité de mesurer les vitesses d'écoulement dans des écoulements de types très différents, et une totale inadaptation à mesurer les vitesses d'écoulement de bulles.

Pour que la vitesse d'une bulle puisse être déterminée, il est en effet nécessaire que la bulle « baigne » le film chaud de la sonde du premier capteur qui est disposée dans l'écoulement, qu'elle baigne ensuite le film chaud de la sonde correspondante du second capteur, et que les deux phénomènes puissent être corrélés.

La dernière condition implique que les deux sondes soient très rapprochées et les deux premières conditions impliquent que la trajectoire de la bulle passe par les deux sondes, c'est-à-dire que cette trajectoire ne soit pas perturbée par la présence des sondes ; or ceci est précisément d'autant moins probable que les sondes sont rapprochées et le compromis entre ces conditions contradictoires est très délicat.

Un dispositif pour étudier la vitesse des bulles dans une canalisation verticale a été proposé dans le brevet français n° 1.417.169. Le bon fonctionnement de ce dispositif, qui utilise deux sondes électriques très fines pour mesurer la résistivité, nécessite également un contact direct d'une bulle avec chacune des deux sondes et présente donc au moins un des inconvénients précédemment décrits.

Un appareillage de mesure de vitesse d'écoulement utilisant la technique de corrélation a également été décrit dans un article de la revue « Electronics Weekly », paru le 23 septembre 1970. Cet appareillage utilise, pour chaque capteur, un thermocouple dont une soudure est dans l'écoulement. Les inconvénients évoqués précédemment — appareil non adapté à tous les régimes d'écoulement, difficultés de mesure en régime de bulles, — s'appliquent tout à fait à l'appareillage décrit dans cet article.

L'invention vise donc un dispositif et un procédé convenant pour la mesure de la vitesse d'écoulement des bulles dans un fluide polyphasique, et également très robuste.

L'invention a pour objet un dispositif et un procédé tels que revendiqués dans les revendications 1 et 9 respectivement.

Chaque signal de détection représente donc, avec ses variations instantanées, le gradient de pression entre deux points.

Ainsi, contrairement au cas où la grandeur physique observée est la capacité calorifique ou la résistivité, l'invention permet de mettre en évidence des variations affectant la grandeur physique observée non seulement à l'emplacement même des points sensibles mais aussi en leur voisinage, ce qui accroît la probabilité de détecter le passage de domaines de phase de dimensions petites par rapport au diamètre de la conduite, et notamment des bulles.

De surcroît, les inconvénients inhérents à l'observation de la pression locale, tels que les bruits à longue distance (road noise), sont éliminés par le caractère différentiel de la mesure effectuée par le capteur.

Par ailleurs, le dispositif selon l'invention est exempt de la fragilité de certains des dispositifs antérieurs.

Le brevet français n° 2.373.833 décrit un système pour déterminer les teneurs respectives d'un mélange d'eau et de pétrole circulant dans un oléoduc, qui comprend un capteur de pression différentielle, mais ce capteur n'est utilisé de façon classique que pour un calcul de densité.

Un avantage essentiel du dispositif selon l'invention est qu'il comprend quatre prises de pression et que de ce fait de nombreuses dispositions différentes sont possibles.

On peut ainsi définir une disposition optimale pour un régime d'écoulement donné d'un fluide polyphasique et surtout, ce qui est plus intéressant en pratique, définir une disposition convenant aussi bien lorsque les domaines de phase sont petits (bulles), ou dans un fluide monophasique turbulent, que lorsque les domaines de phase sont grands (poches ou bouchons).

Grâce à cette souplesse, le dispositif selon l'invention est avantageusement utilisable dans un puits de pétrole en production. Le fluide qui circule dans un puits contient généralement une phase gazeuse qui peut, suivant sa proportion, se présenter aussi bien sous la forme de bulles que sous la forme de grands domaines.

De plus, compte tenu des conditions très sévères qui règnent dans un puits, la robustesse du dispositif selon l'invention est un avantage majeur pour ce type d'utilisation.

D'autres caractéristiques et avantages de l'invention seront compris à la lecture de la description qui en est faite ci-après, à titre indicatif et nullement limitatif, en référence aux dessins annexés sur lesquels :

la figure 1 est une vue en coupe schématique partielle du dispositif de l'invention, dans sa forme de réalisation préférée ;

la figure 2 est un schéma de connexion des capteurs de pression différentielle ;

les figures 3A à 3I représentent quelques-unes des dispositions possibles pour les prises de pression des capteurs.

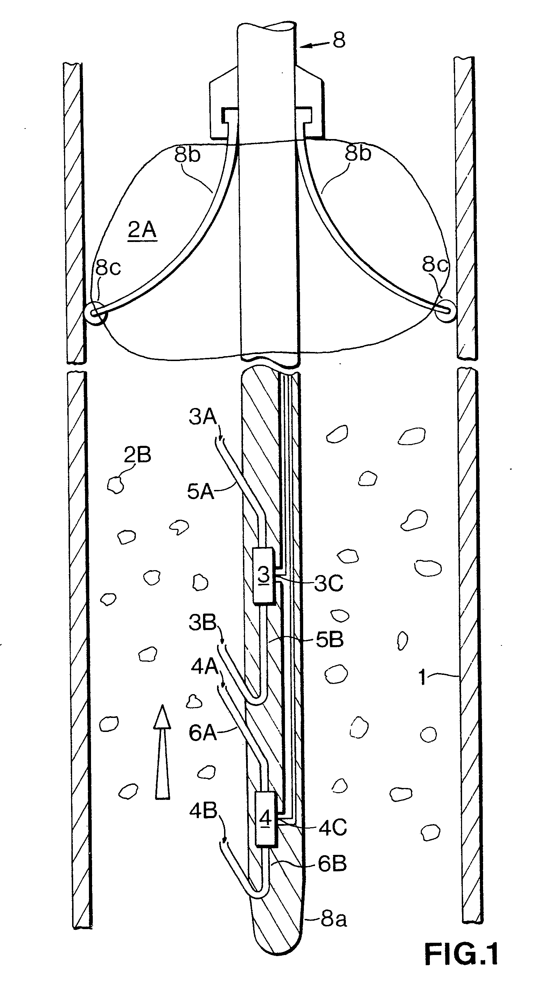

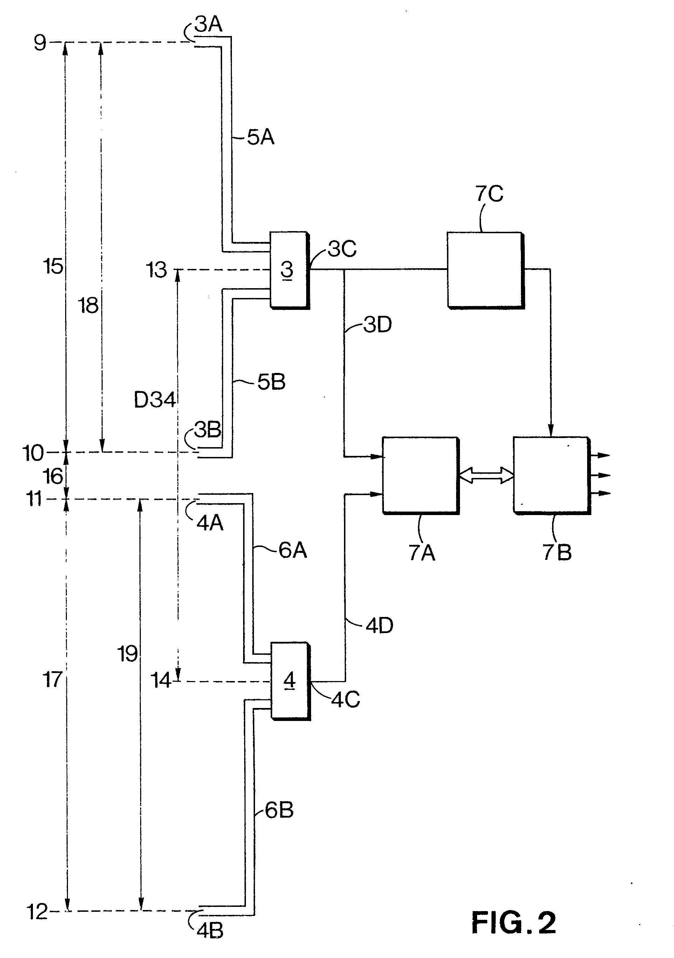

Le dispositif représenté aux figures 1 et 2 est destiné à mesurer la vitesse l'écoulement du fluide qui circule, suivant le sens ascendant indiqué par la flèche, dans une conduite 1 se trouvant dans un puits de pétrole en production. Le fluide qui circule dans un puits est généralement composé d'un mélange d'hydrocarbures liquides et de gaz, avec éventuellement de l'eau. Il s'agit donc en général d'un fluide polyphasique.

La mesure de vitesse portera donc en général sur la phase gazeuse qui est la plus mobile. La phase gazeuse peut toutefois se présenter sous des formes très différentes : on peut trouver aussi bien des bulles 2B, c'est-à-dire des domaines de phase de petites dimensions, inférieures en général au quart du diamètre de la conduite, que des bouchons ou poches de gaz 2A occupant la plus grande partie du diamètre de la conduite.

Il faut cependant souligner que le dispositif selon l'invention est également utilisable dans le cas d'un fluide monophasique turbulent.

Le dispositif comprend deux capteurs de pression différentielle 3, 4, reliés chacun à deux prises de pression 3A, 3B et 4A, 4B, par l'intermédiaire de conduits 5A, 5B et 6A, 6B, remplis d'une phase condensée du fluide en écoulement.

Chaque capteur délivre sur une sortie 3C, 4C, un signal électrique représentatif de la différence de pression entre ses prises, respectivement 3A, 3B et 4A, 4B. Les signaux de détection des capteurs sont transmis par des conducteurs 3D, 4D, à une mémoire 7A qui les enregistre.

Les capteurs 3, 4, sont du type de ceux qui présentent une bande passante d'une, et de préférence plusieurs centaine(s) de hertz et sont par exemple constitués par des capteurs magnétiques à réluctance variable vendus sous la référence DP7 ou DP9 par la société Validyne, de Northridge, U.S.A.

Les prises de pression 3A, 3B et 4A, 4B, qui constituent les points sensibles des capteurs et les conduits 5A, 5B, 6A, 6B, ont une section circulaire d'un diamètre de 1,6 mm. Un signal de détection plus pur est obtenu en orientant, à leur extrémité, les conduits 5A, 5B, 6A, 6B, dans la direction de l'écoulement (figure 1) en particulier en régime d'écoulement à poches (plug flow ou slug flow).

Le dispositif comprend par ailleurs un support 8, constitué de différents organes, propre à maintenir les capteurs et leurs prises de pression et à offrir un guidage aux conducteurs 3D, 4D. Ce support pourra prendre toutes les formes que l'homme de l'art trouvera opportun de lui donner, pourvu qu'il maintienne entre les prises 3A, 3B, 4A, 4B, une relation spatiale déterminée et qu'il permette, sans trop perturber l'écoulement, de disposer ces prises au cœur de l'écoulement, c'est-à-dire à distance de la paroi de la conduite de façon que ces prises de pression soient le siège de variations locales de pression réellement représentatives de l'écoulement. Ce support 8 comprend par exemple un corps allongé 8a entourant les capteurs et solidaire d'organes de centrage tels que des ressorts à lames 8b terminés par des roulettes 8c s'appuyant sur l'intérieur de la conduite 1.

On n'a pas représenté sur le dessin le câble auquel est suspendu le support 8. Ce câble permet de façon classique la descente et la remontée du dispositif dans le puits, ainsi que la transmission des signaux produits par les capteurs 3, 4, vers la surface en vue de leur traitement.

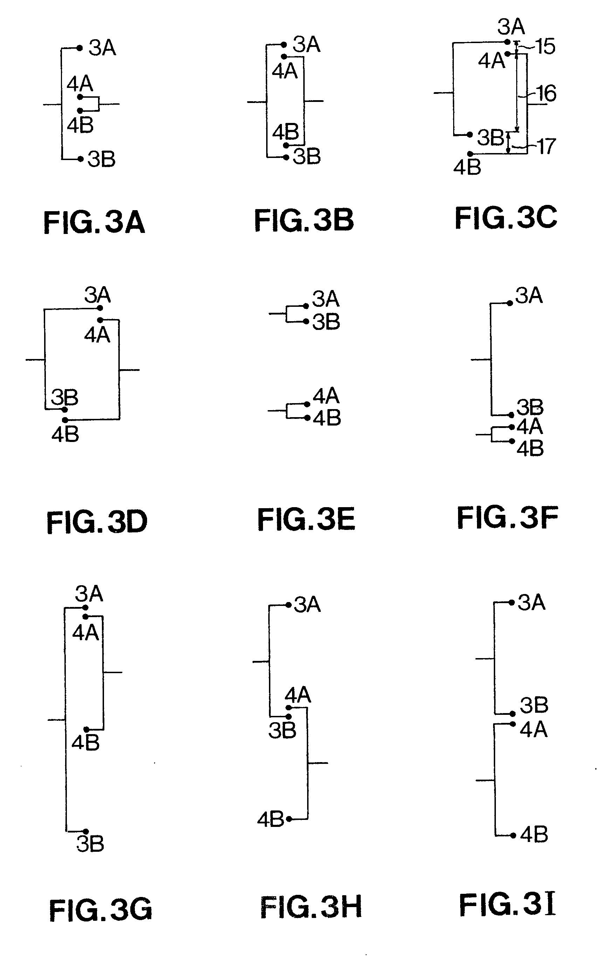

Pour analyser l'influence de la géométrie des prises de pression 3A, 3B, 4A, 4B, sur les performances du dispositif, on a montré aux figures 3A à 3I différentes configurations possibles parmi laquelle la disposition préférée, qui correspond à celle des figures 1 et 2, est représentée à la figure 3I.

Ces figures doivent être comprises avec les deux conventions suivantes : la première est que les points reliés par un trait sont les prises d'un même capteur la seconde est que la direction de l'écoulement est parallèle au plus grand côté de la planche de dessin.

D'autre part il est rappelé que le dispositif comprend nécessairement au moins deux prises de pression alignées avec la direction de l'écoulement.

Il est nécessaire de distinguer les éléments suivants, représentés sur la figure 2 : les niveaux successifs 9, 10, 11, 12 sur lesquels sont réparties les prises de pression, ces niveaux étant constitués par des plans perpendiculaires à la direction de l'écoulement ; les niveaux médians 13, 14 qui sont les niveaux respectivement intermédiaires entre les niveaux des prises 3A, 3B et entre les niveaux des prises 4A, 4B ; les trois intervalles consécutifs 15, 16, 17, respectivement constitués par les distances entre les niveaux voisins 9 et 10, 10 et 11, et 11 et 12 ; les intervalles hétérogènes qui sont constitués par tout intervalle délimité par des prises n'appartenant pas au même capteur (sur la figure 2) ; l'intervalle intermédiaire qui est l'intervalle 16 défini entre les niveaux 10 et 11 ; et l'espacement 18 ou 19 entre les prises d'un même capteur, constitué par la distance entre les niveaux occupés par les prises de pression de ce même capteur 3 ou 4.

Pour la détection de domaines de phase importants 2A, les quatre prises de pression sont alignées dans la direction de l'écoulement et disposées dans la zone centrale de celui-ci, et les niveaux médians 13 et 14 sont séparés l'un de l'autre par une distance au moins égale au tiers du ou des plus grand(s) des intervalles 15 à 17. Cette distance, ou décalage, entre les niveaux médians est comprise entre un demi-diamètre et un diamètre de conduite 1. Typiquement, cette distance est comprise entre 6 et 12 centimètres. Ainsi, les configurations 3A et 3B sont impropres à la détermination de vitesses, de domaines 2A, les configurations 3C, 3D sont également très peu appropriées, la configuration 3G est acceptable et les configurations 3E, 3I et 3H sont les meilleures. Dans les meilleures configurations, la somme des longueurs des intervalles 15 à 17 est au moins égale à la longueur, dans la direction d'écoulement, des domaines 2A. Dans ce cas particulier de l'observation de domaines importants 2A, tels que des poches de gaz, la configuration 3E est même, au moins pour un encombrement équivalent, préférable aux configurations 3H et 3I. En revanche, cette configuration 3E est, pour des raisons qui apparaîtront ci-après, impropre à la mesure de la vitesse d'écoulement de bulles 2B.

Pour la détermination de vitesses d'écoulement de petits domaines de phases 2B, ou de vitesses d'écoulement de fluide monophasique en régime turbulent, l'intervalle ou l'un au moins des intervalles hétérogène(s) (16 sur la figure 2) est au plus égal à la moitié de chaque espacement 18, 19. Ainsi, les configurations 3A, 3E et 3F sont totalement inadéquates pour ce cas. En outre, il convient que tout intervalle hétérogène éventuel supérieur au plus petit des trois intervalles soit au moins égal au double de ce dernier. Ainsi, la configuration 3C, dans laquelle le plus petit intervalle 15 est supérieur à la moitié de l'intervalle hétérogène 17 mais inférieur à cet intervalle, est également très peu satisfaisante pour ce cas. Par contre les configurations 3B et 3D, dans lesquelles les intervalles hétérogènes extrêmes sont égaux, sont très bien adaptées à la mesure de vitesse de petits domaines 2B ou de fluide monophasique turbulent. Les autres configurations 3G, 3H, 3I présentent une adaptation un peu inférieure à celles des configurations 3B et surtout 3D, mais restent très satisfaisantes.

Comme on le voit sur la figure 3D, l'alignement des quatre prises n'est pas indispensable dans ce cas et l'alignement des prises en deux couples hétérogènes est envisageable si ces deux couples sont, soit soumis à des conditions de mesure équivalentes — c'est-à-dire si les vitesses des bulles au voisinage d'un couple de prises voisines présentent une distribution identique à celle des vitesses des bulles au voisinage de l'autre couple de prises voisines, — soit soumis à des conditions de mesure totalement différentes, ce qui est le cas par exemple si l'un des couples de prises voisines est disposé contre la paroi de la conduite.

Enfin, toujours dans ce dernier cas, le plus petit des trois intervalles (qui est nécessairement un intervalle hétérogène conformément aux caractéristiques énoncées) a une longueur au plus égale à dix fois la dimension moyenne que présentent, dans la direction de l'écoulement, les domaines 2B. Typiquement la longueur du plus petit intervalle sera donc de un à deux centimètres.

Il résulte de ce qui précède que, parmi les configurations représentées, seules les configurations 3G à 3I sont adaptées à la détermination de vitesses d'écoulement aussi bien de grands domaines 2A que de petits domaines 2B ou de fluide monophasique turbulent. Comme en outre il est très avantageux que l'intervalle hétérogène soit l'intervalle intermédiaire 16 et que sa longueur soit au plus égale à la moitié et de préférence même inférieure au quart de celle des deux autres intervalles 15, 16, les configurations 3H à 3I sont nettement préférables à la configuration 3G. Une raison supplémentaire à cette préférence est le caractère avantageux de l'égalité de longueur des intervalles 18, 19, typiquement compris entre 5 et 10 centimètres. Dans les configurations 3G à 3I adaptées à l'ensemble des applications évoquées, les quatre prises sont alignées dans la direction de l'écoulement.

Enfin, entre les configurations 3H et 3I adaptées aux différents régimes d'écoulement, c'est la configuration 3I qui est la plus avantageuse. Comme elle ne comprend qu'un seul intervalle hétérogène, à savoir l'intervalle intermédiaire 16, au lieu de trois intervalles hétérogènes dans le cas 3H, la réalisation des conduits 5A, 5B, 6A, 6B est nettement plus simple dans le cas 3I que dans le cas 3H.

Le traitement des signaux de détection est décrit en référence à la figure 2.

Les signaux enregistrés dans la mémoire 7A sont fournis à un calculateur 7B situé en surface, qui détermine le décalage temporel correspondant au maximum de corrélation entre les signaux.

Le calculateur 7B détermine alors la vitesse d'écoulement des domaines de phase 2A ou 2B ou du fluide monophasique en divisant par ce décalage temporel une distance déterminée par la disposition des capteurs.

La distance à considérer n'est cependant pas la même dans tous les régimes d'écoulement.

Dans le cas d'un régime de bulles ou d'un fluide monophasique turbulent, il faut bien entendu choisir comme distance un intervalle hétérogène. Dans la configuration 3I, le seul intervalle hétérogène est l'intervalle intermédiaire 16, et c'est donc cet intervalle 16 qui constitue la distance à considérer.

Dans le cas d'un régime de poches, c'est en revanche, comme on l'a vu, la distance D34 entre les niveaux médians 13 et 14 qui est à considérer.

La sélection entre les distances 16 et D34 est commandée par un dispositif d'analyse 7C qui reçoit l'un des signaux de détection, par exemple celui produit par le capteur 3, et fournit un signal représentatif du régime d'écoulement du fluide et, plus précisément, de la présence de grands domaines de phase.

Le dispositif d'analyse 7C peut fonctionner suivant différents principes.

Le régime d'écoulement peut être identifié par la détermination de la proportion des domaines de phase par rapport au fluide total. Pour obtenir cette proportion, on détermine la fraction du temps total pendant laquelle l'amplitude du signal de détection est comprise entre deux limites.

Ces limites sont déterminées comme étant situées de part et d'autre de l'amplitude que présente le signal de détection lorsque les deux prises sont baignées par un même domaine de la phase observée, à une distance qui correspond à l'incertitude de la mesure. En effet, lorsque la conduite n'est pas horizontale, l'amplitude du signal de détection dépend de la pression hydrostatique entre les prises, donc de la densité de la phase baignant les prises, donc aussi de la nature de cette phase de sorte que, si les prises sont suffisamment proches, l'amplitude du signal est représentative de la phase baignant ces prises.

Il faut noter que cette proportion est en elle-même une donnée intéressante, et c'est un avantage de l'invention que de pouvoir fournir cette information en plus de la vitesse d'écoulement.

Une autre solution pour identifier le régime d'écoulement consiste à effectuer une analyse spectrale du signal de détection, pour déterminer la valeur de la fréquence qui rest présente avec la plus grande amplitude dans ce signal. L'apparition d'une fréquence dominante inférieure à une centaine de hertz caractérise le régime de bouchons ou de poches.

Le dispositif d'analyse 7C est représenté sur la figure 2 comme un élément distinct du calculateur 7B, mais il peut bien entendu être incorporé au calculateur.

**Revendications**

1. Dispositif pour déterminer la vitesse d'écoulement d'un fluide dans une conduite sensiblement verticale, comprenant deux capteurs sensibles à la même grandeur physique et espacés dans la direction de l'écoulement, la vitesse étant déterminée par corrélation entre les deux signaux de détection issus des capteurs, caractérisé par le fait que lesdits capteurs sont des capteurs de pression différentielle (3, 4) comprenant chacun deux prises de pression (3A, 3B, 4A, 4B) espacées dans la direction de l'écoulement, au moins deux prises appartenant à des capteurs différents étant alignées dans cette direction.

2. Dispositif selon la revendication 1, caractérisé par le fait que les prises de pression sont toutes sensiblement alignées dans la direction de l'écoulement et, parmi les trois intervalles consécutifs (15, 16, 17) entre prises de pression, l'intervalle intermédiaire (16) est au plus égal à la moitié de chacun des deux autres.

3. Dispositif selon la revendication 2, caractérisé par le fait que l'intervalle intermédiaire (16) est le seul intervalle défini par deux prises de pression n'appartenant pas au même capteur.

4. Dispositif selon l'une des revendications 2 et 3, caractérisé par le fait que les intervalles (18, 19) entre les prises d'un même capteur sont sensiblement égaux.

5. Dispositif selon l'une des revendications 2 à 4, caractérisé par le fait qu'il comprend des moyens d'analyse (7C) pour détecter la présence de grands domaines de phase (2A) dans le fluide à partir d'un des deux signaux de détection, et des moyens de calcul (7B) pour déterminer le décalage temporel correspondant au maximum de corrélation entre les deux signaux de détection et calculer la vitesse en divisant la distance entre les capteurs par ledit décalage temporel, cette distance étant choisie égale, soit audit intervalle intermédiaire (16) en l'absence de grands domaines, soit à l'intervalle (D34) entre les niveaux médians (13, 14) définis respectivement comme les niveaux intermédiaires entre les niveaux des prises de chaque capteur, en présence de grands domaines.

6. Dispositif selon la revendication 5, caractérisée par le fait que lesdits moyens d'analyse (7C) comprennent un dispositif pour déterminer la fraction du temps total pendant laquelle l'un des deux signaux de détection a une amplitude comprise entre deux limites déterminées.

7. Dispositif selon la revendication 5, caractérisé par le fait que lesdits moyens d'analyse (7C) comprennent un dispositif pour déterminer la valeur de la fréquence présente avec la plus grande amplitude dans l'un des deux signaux de détection.

8. Dispositif selon l'une des revendications 1 à 7, caractérisé par le fait que les capteurs (3, 4) sont portés par un support (8) muni d'organes de centrage (8G, 8C) agencés pour venir en contact avec les parois de la conduite.

9. Procédé pour déterminer la vitesse d'écoulement d'un fluide dans une conduite sensiblement verticale, du type dans lequel on dispose dans la conduite deux capteurs sensibles à la même grandeur physique en les espaçant dans la direction de l'écoulement, et on détermine la vitesse par corrélation entre les deux signaux de détection produits par les capteurs, caractérisé par le fait que ladite grandeur physique est le gradient de pression entre deux points espacés dans la direction de l'écoulement.

**Claims**

1. Apparatus for determining the flow velocity of a fluid in a substantially vertical conduit, comprising two sensors responsive to the same physical parameter and spaced apart in the direction of flow, the velocity being determined by correlation between the two detection signals generated by the sensors, characterized in that said sensors are differential pressure sensors (3, 4), each comprising two pressure ports (3A, 3B, 4A, 4B) spaced apart in the direction of flow, at least two ports belonging to two different sensors lining up in this direction.

2. Apparatus according to claim 1, characterized in that all of the pressure ports are substantially aligned in the direction of flow and, among the three consecutive intervals (15, 16, 17) between the pressure ports, the intermediate interval (16) is at most equal to one half of each of the two others.

3. Apparatus according to claim 2, characterized in that the intermediate interval (16) is the only interval defined by two pressure ports not belonging to the same sensor.

4. Apparatus according to claims 2 and 3, characterized in that the intervals (18, 19) between the ports of a given sensor are nearly equal.

5. Apparatus according to any of claims 2 to 4, characterized in that it comprises analysis means (7C) for detecting the presence of large phase domains (2A) in the fluid based on the two detection signals, and calculating means (7B) for determining the time shift corresponding to the correlation maximum between the two signals and computing the velocity by dividing the distance between said sensors by said time shift, the distance being choosen equal either to said intermediate interval (16) in the absence of large domains, or to the interval (D34) between the median levels (13, 14) respectively defined as the intermediate levels between the levels of the ports of each sensor in the presence of large domains.

6. Apparatus according to claim 5, characterized in that said analysis means (7C) comprise a device for determining the fraction of total time during which one of the two detection signals has an amplitude contained within two predetermined limits.

7. Apparatus according to claim 5, characterized in that said analysis means (7C) comprise a device for determining the frequency present with the highest amplitude in one of the two detection signals.

8. Apparatus according to any of claims 1 to 7, characterized in that the sensors (3, 4) are carried by a support (8) equipped with centralizing devices (8G, 8C) arranged to come in contact with the conduit walls.

9. Method for determining the flow velocity of a fluid in a nearly vertical conduit, of the kind wherein two sensors responsive to the same physical parameter are placed apart inside the conduit in the direction of flow and the speed is determined by correlating the two detection signals produced by the sensors, characterized in that said physical parameter is the pressure gradient between two points spaced apart in the direction of flow.

**Ansprüche**

1. Anordnung zum Bestimmen der Ausflußgeschwindigkeit eines Fluids in einem im wesentlichen vertikalen Leitungsabschnitt mit zwei auf die gleiche physikalische Größe ansprechenden Aufnehmern, die in Richtung der Strömung im Abstand angeordnet sind, wobei die Geschwindigkeit bestimmt wird durch die Korrelation zwischen den beiden Aufnehmersignalen, dadurch gekennzeichnet, daß die Aufnehmer Differentialdruckaufnehmer (3, 4) sind, die je zwei Druckanschlüsse (3A, 3B, 4A, 4B) im Abstand voneinander in Richtung der Strömung aufweisen, wobei mindenstens zwei Druckanschlüsse zu unterschiedlichen Aufnehmern gehörend in dieser Richtung ausgefluchtet sind.

2. Anordnung nach Anspruch 1, dadurch gekennzeichnet, daß die Druckanschlüsse sämtlich im wesentlichen in Richtung der Strömung ausgefluchtet angeordnet sind und daß unter den drei aufeinanderfolgenden Intervallen (15, 16, 17) zwischen den Druckanschlüssen das mittlere Intervall (16) höchstens gleich der Hälfte jedes der beiden anderen ist.

3. Anordnung nach Anspruch 2, dadurch gekennzeichnet, daß das mittlere Intervall (16) das einzige Intervall ist, das definiert wird durch zwei Druckanschlüsse, welche nicht zum gleichen Aufnehmer gehören.

4. Anordnung nach einem der Ansprüche 2 und 3, dadurch gekennzeichnet, daß die Intervalle (18, 19) zwischen den Druckanschlüssen ein- und desselben Aufnehmers im wesentlichen gleich sind.

5. Anordnung nach einem der Ansprüche 2 bis 4, dadurch gekennzeichnet, daß sie Analysemittel (7C) umfaßt zum Feststellen des Vorhandenseins großer Phasendomänen (2A) in dem Fluid, ausgehend von einem der beiden Erfassungssignale, sowie Berechnungsmittel (7B) zum Bestimmen der zeitlichen Verlagerung entsprechend dem Maximum der Korrelation zwischen den beiden Erfassungssignalen und zum Berechnen der Geschwindigkeit durch Division des Abstandes zwischen den Aufnehmern durch diese zeitliche Verlagerung, wobei dieser Abstand so gewählt wird, daß er gleich entweder dem mittleren Intervall (16) bei Fehlen der großen Domänen oder gleich dem Intervall (D34) zwischen den mittleren Niveaus (13, 14) ist, definiert jeweils wie die mittleren Niveaus zwischen den Niveaus der Druckanschlüsse jedes Aufnehmers bei Vorhandensein großer Domänen.

6. Anordnung nach Anspruch 5, dadurch gekennzeichnet, daß die Analysemittel (7C) eine Vorrichtung umfassen zum Bestimmen des gesamten Zeitbruchteils während welchem eines der beiden Erfassungssignale eine Amplitude zwischen zwei vorgegebenen Grenzwerten aufweist.

7. Anordnung nach Anspruch 5, dadurch gekennzeichnet, daß die Analysemittel (7C) eine Vorrichtung umfassen zum Bestimmen des Wertes der präsenten Frequenz mit der Größenamplitude in einem der beiden Erfassungssignale.

8. Anordnung nach einem der Ansprüche 1 bis 7, dadurch gekennzeichnet, daß die Aufnehmer (3, 4) von einem Support (8) getragen sind, der mit Zentrierorganen (8D, 8C) versehen ist, ausgebildet zum Inkontakttreten mit den Wandungen des Leitungsabschnitts.

9. Verfahren zum Bestimmen der Strömungsgeschwindigkeit eines Fluids in einem im wesentlichen vertikalen Leitungsabschnitt, bei dem man in den Leitungsabschnitt zwei Aufnehmer für dieselbe physikalische Größe einbringt und sie in einem Abstand in Richtung der Strömung anordnet sowie die Geschwindigkeit durch Korrelation zwischen den beiden Erfassungssignalen, erzeugt von den Aufnehmern, ermittelt, dadurch gekennzeichnet, daß die physikalische Grenze der Druckgradient zwischen zwei in Richtung der Strömung im Abstand liegenden Punkten ist.

**FIG.1**

FIG.2

FIG.3A

FIG.3B

FIG.3C

FIG.3D

FIG.3E

FIG.3F

FIG.3G

FIG.3H

FIG.3I